# EUROPEAN PATENT APPLICATION

(11) **EP 2 858 009 A1**
(43) Date of publication of application: **08.04.2015**
(21) Application number: 13835384.2
(22) Date of filing: 26.07.2013
(51) Int. Cl.: G06K 17/00, H01Q 1/12

(54) **RFID READING DEVICE, AND INFORMATION READING METHOD USING SAME**

(30) Priority: 06.09.2012 JP 2012196484
(71) Applicant: Sharp Kabushiki Kaisha, Osaka-shi, Osaka 545-8522 (JP)
(72) Inventor: HARA, Hidetaka, Yao-shi, Osaka 581-0064 (JP); RYUHJIN, Shigeo, Yao-shi, Osaka 581-0064 (JP); TSUDA, Yasuhiko, Yao-shi, Osaka 581-0064 (JP)
(74) Representative: Müller-Boré & Partner Patentanwälte PartG mbB
(86) International application number: PCT/JP2013/070380
(87) International publication number: WO 2014/038307

(57) **Abstract**

There is provided an RFID reading device that can reliably read information of an IC tag attached to a component disposed in an object enclosed by a substance through which radio waves cannot be easily transmitted, and an information reading method using the RFID reading device. An object (4) and an IC tag (5) attached to the object (4) are disposed in interior space (3) enclosed by a vehicle body (2) made of a material that inhibits transmission of radio waves. An RFID reading device (1) includes an information reading unit (7) and a rotation driving unit (8). The information reading unit (7) has an antenna unit (6) and receives object-related information through the antenna unit (6), thereby reading the object-related information. Since the antenna unit (6) is rotated about a predetermined rotation axial line (L1) by the rotation driving unit (8), regardless of the orientation of the posture of the IC tag (5) disposed in the interior space (3) of the vehicle body (2), the object-related information from the IC tag (5) can be reliably read by reducing the effects of reflection, absorption, and so on of radio waves as much as possible.

## Description

### Technical Field

The present invention relates to an RFID reading device that can be practiced advantageously to read information from an IC tag attached to an object disposed in a structure through which radio waves cannot be easily transmitted or in radio-wave-shielded space enclosed by the structure using a radio frequency identification (RFID) technique, and an information reading method using the RFID reading device.

### Background Art

There is a conventional radio frequency identification (RFID) reading system that transmits or receives information through short distance wireless communication using radio waves between an RFID reading device and an IC tag having built-in radio frequency identification information installed in various parts, which are typified by electric and electronic parts, mechanical parts, or the like in order to manage information of the parts and the devices incorporating the parts in real time.

Such IC tags are roughly classified into an active IC tag having a battery and a passive IC tag having no battery. The passive IC tag generates radio electric power from transmitted radio waves to activate the integrated circuit (IC). Then, data is transmitted by reflecting and modulating transmitted radio waves. The IC tag includes a unique code and data for identifying each article, which can be managed and determined by identifying the code and data.

The RFID system is constructed by combining the IC tag, an RFID reader writer, a host computer, a data server, and so on. In particular, a management system that uses the RFID system to manage articles with IC tags along a path beginning with shipment is referred to as a traceability system.

The prior art of the RFID reading device used in such an RFID system, a such traceability system, is disclosed in PTL 1, for example. A problem addressed by this prior art is that, although combination of the passive IC tag of radio wave type and linearly polarized wave antenna prolongs the communication distance, since the posture of the article is unknown and the posture cannot be easily changed if the IC tag is attached to an article, the reflection of radio waves or the orientation of the antenna or the IC tag tends to affect the reception of radio waves. The prior art uses an antenna movement apparatus for moving the antenna from the reference position so as to change the radiation direction of radio waves, changes the radiation direction of radio waves so as to be able to communicate with an IC tag even if the IC tag is attached to an article whose posture cannot be easily changed, and prolongs the communication distance without eliminating effects of the reflection and so on of radio waves and the effects of the antenna and the IC tag.

### Citation List

### Patent Literature

PTL 1: Japanese Unexamined Patent Application Publication No. 2010-122941

### Summary of Invention

### Technical Problem

In the prior art, if the strength of radio waves changes since transmitted radio waves and reflected radio waves are strengthened or weakened to each other due to the reflection of radio waves by surrounding objects, the transmitted radio waves to the IC tag or the reflected radio waves (back scatter) from the IC tag become unstable in some places and are significantly affected depending on the arrangement of surrounding objects, particularly on the arrangement of metal surfaces. In particular, if metal is present in the vicinity of the IC tag, the transmitted radio waves interfere with the reflected radio waves to generate standing waves, thereby making it impossible to read information of the IC tag in some places. In addition, it is very difficult to read information of the IC tag attached to an object enclosed by metal or a substance through which radio waves cannot be easily transmitted (for example, an IC tag a component in a vehicle body) from outside the object.

An object of the present invention is to provide an RFID reading device that can reliably read, from the outside, information of an IC tag attached to a component disposed in an object enclosed by a substance through which radio waves cannot be easily transmitted, and an information reading method using the RFID reading device.

### Solution to Problem

The present invention provides an RFID reading device for reading object-related information concerning an object disposed in interior space enclosed by a structure made of a material that inhibits transmission of radio waves using radio waves transmitted from an IC tag attached to the object, including an information reading unit that includes an antenna unit for receiving the radio waves transmitted from the IC tag, the information reading unit reading the object-related information from radio waves received by the antenna unit, and a rotation driving unit that rotates the antenna unit about a predetermined rotation axial line.

In the present invention, the rotation driving unit preferably includes a supporting base that supports the antenna unit tiltably about a tilt axial line orthogonal to the rotation axial line and a rotary motor that rotates the supporting base about the rotation axial line.

In the present invention, the supporting base is preferably provided with a tilt driving unit that tilts the antenna unit about the tilt axial line.

In the present invention, the information reading unit preferably has a radio wave reflecting plate reflecting incoming radio waves to the antenna unit.

In the present invention, the rotation driving unit preferably includes an elevation driving unit, the elevation driving unit moving the antenna unit in parallel with the rotation axial line with respect to the rotation driving unit.

In the present invention, the IC tag is preferably a passive IC tag and the information reading unit is configured to transmit, from the antenna unit, excitation radio waves for transmitting the object-related information from the IC tag.

In the present invention, the information reading device preferably includes a communication unit capable of communicating with an information management device placed outside the structure, the information reading device being configured to be able to transmit the object-related information from the communication unit to the information management device.

In the present invention, the information management device preferably includes a controller that controls operation of the RFID reading device and an input unit that inputs instruction information for instructing the controller to perform the operation.

The present invention provides an information reading method using an RFID reading device for reading object-related information concerning an object disposed in interior space enclosed by a structure made of a material that inhibits transmission of radio waves using radio waves transmitted from an IC tag attached to the object, including installing, in interior space of the structure, an RFID reading unit that includes an information reading unit including an antenna unit for receiving the radio waves transmitted from the IC tag, the information reading unit reading the object-related information from radio waves received by the antenna unit, and a rotation driving unit that rotates the antenna unit about a predetermined rotation axial line, rotating the antenna unit about the predetermined rotation axial line using the rotation driving unit, and reading the object-related information transmitted from the IC tag using the information reading unit with the antenna unit being rotated about the predetermined rotation axial line.

### Advantageous Effects of Invention

In the present invention, an object and an IC tag attached to the object are disposed in interior space enclosed by a structure made of a material that inhibits transmission of radio waves. The IC tag only needs to transmit object-related information about the object via radio waves. The IC tag may be a passive IC tag that transmits radio waves when excited by received radio waves, an active IC tag that transmits radio waves using the electric power of a built-in battery, or a semi-passive IC tag that is activated by the electric power of a built-in battery and transmits radio waves to an upstream system by modulating and reflecting received radio waves as in the passive IC tag. In addition, data can be written from a control device in the object in a wired manner, but the RFID reading device may be an IC tag with a communication line that functions as a passive IC tag or semi-passive IC tag.

The RFID reading device according to the present invention includes an information reading unit and a rotation driving unit in order to read object-related information from such an IC tag. The information reading unit has an antenna unit and receives the object-related information through the antenna unit, thereby reading the object-related information. Since the antenna unit is rotated about a predetermined rotation axial line by the rotation driving unit, regardless of the orientation of the posture of the IC tag disposed in the interior space of the structure, the information reading unit can reliably read the object-related information from the IC tag disposed in the interior space of the structure made of a substance through which radio waves cannot be easily transmitted by reducing the effects of reflection, absorption, and so on of radio waves as much as possible to reduce radio wave interference with reflected radio waves (back scatter) from the IC tag.

In the present invention, since the rotation driving unit includes the supporting base that supports the antenna unit tiltably about the tilt axial line orthogonal to the rotation axial line and the rotary motor that rotates the supporting base about the rotation axial line, radio waves transmitted from the IC tag can be received by rotating the support base about the rotation axial line and rotating the antenna unit in the same direction. Accordingly, the information reading unit can reliably read the object-related information from the IC tag disposed in the interior space enclosed by the structure made of a substance through which radio waves cannot be easily transmitted by reducing the effects of reflection, absorption, and so on of radio waves as much as possible to reduce radio wave interference with reflected radio waves (back scatter) from the IC tag.

In addition, in the present invention, since the supporting base is provided with a tilt driving unit that tilts the antenna unit about the tilt axial line, a wide range of radio waves can be received by rotating the antenna unit about the rotation axial line and tilting the antenna unit about the tilt axial line. Accordingly, the information reading unit can reliably read the object-related information from the IC tag disposed in the interior space enclosed by the structure made of a substance through which radio waves cannot be easily transmitted by reducing the effects of reflection, absorption, and so on of radio waves as much as possible to reduce radio wave interference with reflected radio waves (back scatter) from the IC tag.

In the RFID reading device according to the present invention, since the information reading unit is provided with a radio wave reflecting plate reflecting incoming radio waves to the antenna unit, the antenna unit can be placed more freely in the information reading unit, as compared with the case in which the antenna unit directly receives radio waves.

In the RFID reading device according to the present embodiment, since the rotation driving unit is provided with the elevation driving unit that moves the antenna unit in parallel with the rotation axial line with respect to the rotation driving unit, the information reading unit can reliably read object-related information from the IC tag disposed in the interior space enclosed by a structure made of a substance through which radio waves cannot be easily transmitted by reducing the effects of reflection, absorption, and so on of radio waves as much as possible to reduce radio wave interference with reflected radio waves (back scatter) from the IC tag.

In the present invention, the IC tag is a passive IC tag and the information reading unit is configured to transmit, from the antenna unit, excitation radio waves for transmitting the object-related information from the IC tag, thereby achieving a low-cost RFID reading device using an IC tag of a simple structure.

In the present invention, since the information reading device includes a communication unit capable of communicating with an information management device placed outside the structure and the information reading device is configured to be able to transmit the object-related information from the communication unit to the information management device, it is possible to comprehensively manage information about many objects by storing the object-related information in the information management device as data of a database or the like.

In the present invention, since the information management device includes a controller that controls the operation of the RFID reading device and an input unit that inputs instruction information for instructing the controller to perform the operation, the information management device can control the operation of the RFID reading device from outside the structure, thereby improving utilization.

In the present invention, an object to which an IC tag is attached is disposed in interior space enclosed by a structure made of a material that inhibits transmission of radio waves. The IC tag only needs to transmit object-related information about the object via radio waves.. The IC tag may be a passive IC tag that transmits radio waves when excited by received radio waves, an active IC tag that transmits radio waves using the electric power of a built-in battery, or a semi-passive IC tag that is activated by the electric power of a built-in battery and transmits radio waves to an upstream system by modulating and reflecting received radio waves as in the passive IC tag. In addition, data can be written from a control device in the object in a wired manner, but the RFID reading device may be an IC tag with a communication line that functions as a passive IC tag or semi-passive IC tag.

The RFID reading device includes an information reading unit and a rotation driving unit in order to read object-related information from such an IC tag. The information reading unit has an antenna unit, receives the object-related information through the antenna unit, and reads the object-related information. Since the antenna unit is rotated about a predetermined rotation axial line by the rotation driving unit, regardless of the orientation of the posture of the IC tag disposed in the interior space of the structure, the information reading unit can reliably read the object-related information from the IC tag disposed in the interior space of the structure made of a substance through which radio waves cannot be easily transmitted by reducing the effects of reflection, absorption, and so on of radio waves as much as possible to reduce radio wave interference with reflected radio waves (back scatter) from the IC tag.

### Brief Description of Drawings

The objects, features, and advantages of the present invention will become apparent from detailed description and drawings below.
[Fig. 1] Fig. 1 is an exploded perspective view showing an RFID reading device according to an embodiment of the present invention.
[Fig. 2] Fig. 2 is a block diagram showing the electric structure of the RFID reading device.
[Fig. 3] Fig. 3 is a plan view schematically showing a state in which the RFID reading device is installed in the body of a vehicle.
[Fig. 4] Fig. 4 schematically shows the specific structure of a rotation driving unit.
[Fig. 5] Fig. 5 schematically shows the specific structure of an elevation driving unit.
[Fig. 6] Fig. 6 is a perspective view showing the appearance of an RFID reading device according to another embodiment of the present invention.
[Fig. 7] Fig. 7 is a perspective view schematically showing the structure of the RFID reading device.
[Fig. 8] Fig. 8 is a perspective view schematically showing the structure of an RFID reading device according to still another embodiment of the present invention. Description of Embodiments

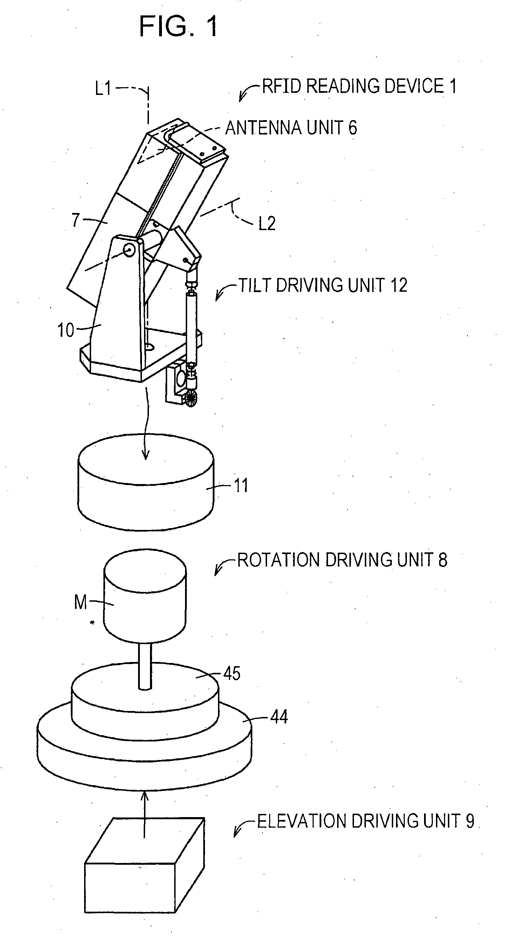

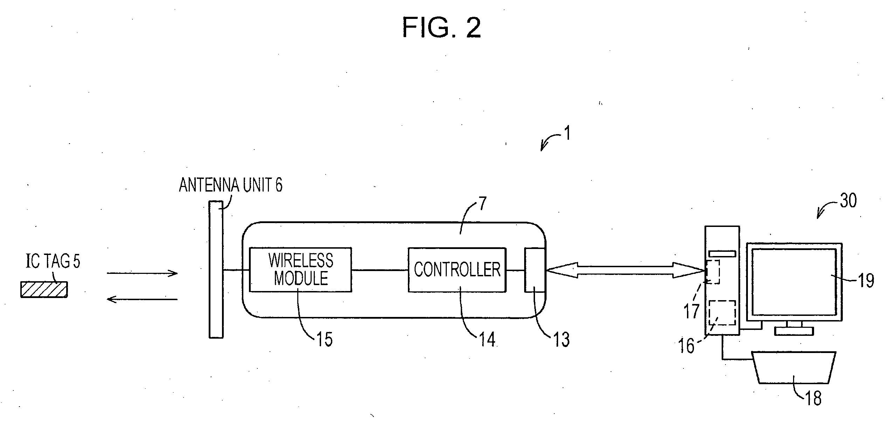

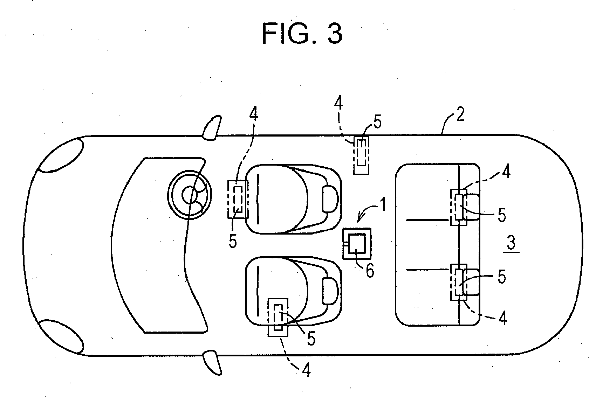

Fig. 1 is an exploded perspective view showing an RFID reading device 1 according to an embodiment of the present invention, Fig. 2 is a block diagram showing the electric structure of the RFID reading device 1, and Fig. 3 is a plan view schematically showing a state in which the RFID reading device 1 is installed in a structure, which is, for example, a vehicle body 2 of an ordinary vehicle. An information reading method according to the present invention is achieved using the RFID reading device 1 according to the embodiment.

In interior space 3 enclosed by the vehicle body 2, which is a structure made of a material that inhibits transmission of radio waves, an object 4 and an IC tag 5, attached to the object 4, that can transmit object-related information concerning the object 4 using radio waves are disposed. To manage component information by reading the object-related information from the IC tag 5 during shipment of the manufactured vehicle, the RFID reading device 1 according to the present embodiment is delivered to the interior space 3 by the worker and disposed in a position where radio waves transmitted from the IC tag 5 as back scatter can be received at a higher sensitivity (for example, a floor section or the like of the vehicle body 2 substantially at the center of the interior space 3). The object 4 is a device, component, or the like installed in the vehicle body 2.

If the structure is the vehicle body 2 of the above ordinary vehicle, the material that inhibits transmission of radio waves may be a frame, chassis, or the like mainly made of aluminum alloy. In addition, wiring in the vehicle, metal cushion springs included in the seat, metal screw parts such as bolts, nuts, screws, and rivets, fixtures, and so on interrupt transmission of radio waves and prevent the radio waves reflected by the IC tag 5 from being read from outside the vehicle body 2.

The RFID reading device 1 includes an antenna unit 6 that receives radio waves transmitted from the IC tag 5, an information reading unit 7 that reads object-related information from the radio waves received by the antenna unit 6, a rotation driving unit 8 that rotates the antenna unit 6 about a predetermined a rotation axial line L1, and an elevation driving unit 9 that moves the antenna unit 6 in parallel with the rotation axial line L1 with respect to the rotation driving unit 8.

The object-related information may be, for example, a component name or component code, a manufacturer name or manufacturer code, a production lot number, a production factory code, the data of manufacture, or durable years, may be the date of manufacture, the date of shipment, the date of inspection, the name of inspection factory of a built-in object, or may be the number of uses, the total time of use, a code for indicating wear or exhaustion, or recorded numbers such as a temperature, humidity, pressure, vibration, and so on.

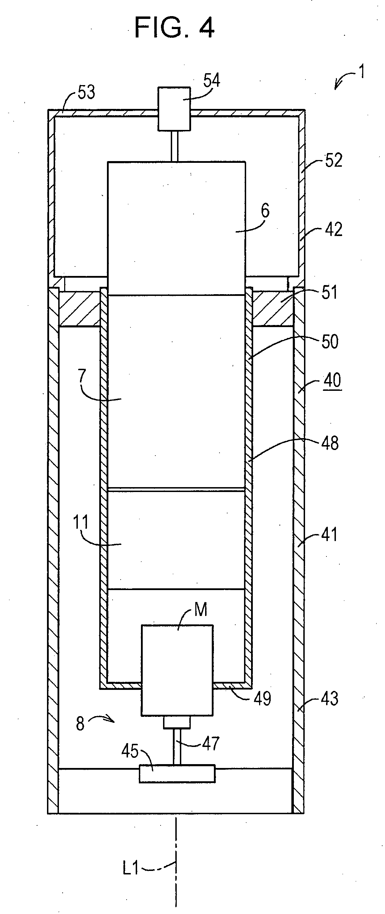

Fig. 4 is a sectional view schematically showing the specific structure of the rotation driving unit 8. The RFID reading device 1 is housed in a housing 40. The housing 40 includes a housing body 41, which is cylindrical and has a bottom, and an upper cover 42, which is cylindrical and has a bottom, attached to an opening of the housing body 41. The rotation driving unit 8 includes a rotary motor M, a battery 11, which supplies driving power to the rotary motor M, and a reducer 45, which reduces the rotation of a power output shaft 47 of the rotary motor M and transfers the reduced rotation to the housing 40.

The housing body 41 includes a hollow cylinder 43, which is cylindrical, and a bottom 44, which is circular and convers one end in the axial direction of the hollow cylinder 43. The reducer 45 is secured to the bottom 44 and the power output shaft 47 of an elevating motor M is connected to the reducer 45. The rotation of the power output shaft 47 is input to the reducer 45 and reduced to a predetermined reduction ratio, for example, 1/120 to 1/30, and the RFID reading device 1 is rotationally driven at the reduced rotation speed. The housing body 41 and the upper cover 42 are made of a material (for example, synthetic resin) through which radio waves can be transmitted. The elevating motor 46 may be achieved by a direct current motor or stepping motor.

The housing 40 is a molded object of hard synthetic resin. The hard synthetic resin is polyvinylchloride, for example. The battery 11 may be a lithium ion battery, for example.

The information reading unit 7 and the battery 11 of RFID reading device 1 are housed in a casing 48. The casing 48 includes a hollow cylindrical part 49 and a circular bottom 50, which covers one end in the axial direction of the hollow cylindrical part 49. The elevating motor 46 is inserted into and secured to the circular bottom 50. The RFID reading device 1 is rotationally driven together with the casing 48. The casing 48 covers the information reading unit 7 and the battery 11, and the antenna unit 6, projecting from the casing 48, is covered with the upper cover 42.

An opening of the casing 48 is axially supported by the opening of the housing body 41 through a bearing 51 so that the casing 48 is rotatable about the rotation axial line L1 in the housing 40. Accordingly, in the RFID reading device 1, the information reading unit 7, the battery 11, and the antenna unit 6 are rotated stably by the rotary motor 46 about the rotation axial line L1. The casing 48 is a molded object of hard synthetic resin. The hard synthetic resin is polyvinylchloride, for example.

The upper cover 42 includes a hollow cylinder 52 and a circular bottom 53 that covers one end in the axial direction of the hollow cylinder 52 and, at the center of the circular bottom 53, there is a rotary encoder 54, which is a rotation detector for detecting the rotation amount and rotation position of the RFID reading device 1. The rotary encoder 54 outputs a rotation amount detection signal that depends on the rotation of the RFID reading device 1 and the rotation amount detection signal is output to the controller 14, so that the rotation can be controlled based on the rotation speed and rotation amount set by an information management server 30, which will be described later.

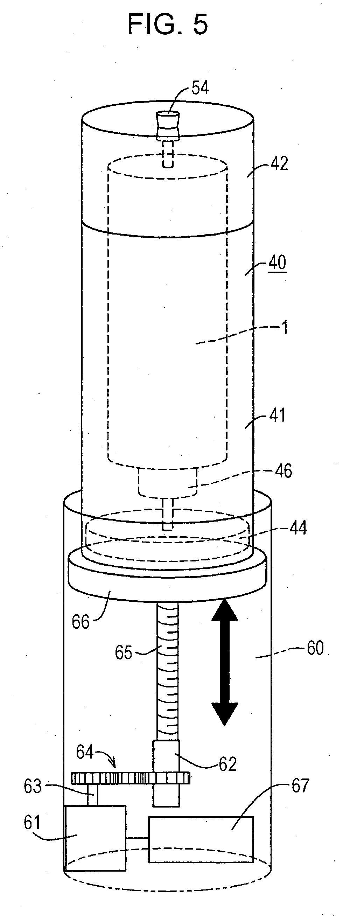

Fig. 5 schematically shows the specific structure of the elevation driving unit 9. The elevation driving unit 9 includes an outer cylindrical part 60 with a bottom, an elevating motor 61 housed in the outer cylindrical part 60, a nut member 62, a gear train 64 that reduces the rotation of a power output shaft 63 of the elevating motor 61 and transfers the reduced rotation, the ball screw shaft 65 screwed into the nut member 62, a disc like base 66 connected to an upper end of a ball screw shaft 65 orthogonally to the ball screw shaft 65 via a thrust bearing (not shown) that allows the rotation of the ball screw shaft 65, and a driving circuit 67 that drives the elevating motor 61.

The driving circuit 76 is connected to the controller 14 and supplies driving power to the elevating motor 61 in response to an instruction from the controller 14. The rotation of the power output shaft 63 of the elevating motor 61 is transferred to the nut member 62 via the gear train 64. The gear train 64 includes a plurality of spur gears, for example. Rotation of the nut member 62 in one direction raises the ball screw shaft 65 or rotation of the nut member 62 in the other direction lowers the ball screw shaft 65, the base 66 is driven upward or downward, and the RFID reading device 1 is accordingly driven upward or downward together with the housing 40.

The IC tag 5 is a passive IC tag and the information reading unit 7 is configured to transmit, from the antenna unit 6, excitation radio waves for transmitting the object-related information from the IC tag 5. The IC tag 5 only needs to transmit the object-related information about the object 4 via radio waves. The IC tag 5 may be a passive IC tag that transmits radio waves when excited by received radio waves, an active IC tag that transmits radio waves using the electric power of a built-in battery, or a semi-passive IC tag that is activated by the electric power of a built-in battery and transmits radio waves to an upstream system by modulating and reflecting received radio waves as in the passive IC tag. In addition, data can be written from a control device in the object in a wired manner, but the RFID reading device may be an IC tag with a communication line that functions as a passive IC tag or semi-passive IC tag.

The information reading unit 7 includes a communication unit 13 capable of communicating with the information management server 30, which is an information management device placed outside the vehicle body 2, the controller 14, and a wireless module 15 and the information reading unit 7 is configured to be able to transmit the object-related information from the communication unit 13 to the information management server 30. The information management server 30 is achieved by a personal computer.

The controller 14 issues a command to the wireless module 15 (for example, reading of the IC tag 5, selecting and excluding of read data, and controlling of duplicate data), controlling of a communication interface unit (for example, transmitting data to or receiving data from a server and setting communication parameters), rotating and tilting of the antenna unit 6 and controlling of the elevation driving unit 9 (for example, instructing of the rotation speed and direction), and monitoring and controlling of the battery 11 (for example, warning of a drop in the battery voltage and controlling of battery charge).

The controller 14 of this type may be used to cause the rotation driving unit 8 to control the rotation speed and rotation angle of the information reading unit 7, a tilt driving unit 12 to control the tilt speed and tilt angle of the information reading unit 7, and the elevation driving unit 9 to control the up/down speed and up/down movement amount of the information reading unit 7 by presetting a plurality of patters corresponding to the vehicle models and shapes of the vehicle body 2 using the information management server 30 and selecting the pattern best suited to the vehicle model or shape of the vehicle body 2 from the plurality of patters during use. The wireless module 15 converts an identification command, a data read command, an address, an instruction of the number of bytes, a data write command, data specification, and so on for the IC tag of the controller 14 into wireless signals and transmits them to the antenna by increasing the power after analog conversion such as transmission, modulation, or other processing of radio waves according to the protocol specified for the IC tag. In addition, the wireless module 15 receives radio waves from the IC tag, amplifies and modulates the received radio waves, converts the amplified and modulated radio waves into digital signals, and passes the digital signals to the controller.

The information management server 30 includes a controller 16 that controls the operation of the information management server 30, a communication unit 17 that communicates with the communication unit 13 of the information reading unit 7 via a communication interface of, for example, a wireless LAN, an input unit 18 for inputting instruction information that instructs the controller 16 to perform the operation, and a display unit 19 that displays an input/output image such as the object-related information using the controller 16. Each of the controllers 14 and 16 is achieved by a computer including a central processing unit (CPU) and so on.

When reading the object-related information of the IC tag 5 using the RFID reading device 1 as configured above, the worker places the RFID reading device 1 in the interior space 3 of the vehicle body 2 and reads the object-related information transmitted from the IC tag 5 using the information reading unit 7 while the rotation driving unit 8 rotates the antenna unit 6 about the rotation axial line L1. The read object-related information is transferred to the controller 14 through the wireless module 15 and then transmitted from the communication unit 13 to the information management server 30. The information management server 30 receives object-related information from the information reading unit 7 using the communication unit 17, preforms predetermined signal processing using the controller 16, and stores in a storage unit (not shown) as a database.

As described above, in the RFID reading device 1 according to the present embodiment, the object 4 and the IC tag 5 attached to the object 4 are disposed in the interior space 3 enclosed by the vehicle body 2 made of a material that inhibits transmission of radio waves.

The RFID reading device 1 according to the present invention includes the information reading unit 7, the rotation driving unit 8, and the tilt driving unit 12 in order to read object-related information from such an IC tag 5, receives the object-related information through the antenna unit 6 of the information reading unit 7, thereby reading the object-related information. At this time, since the antenna unit 6 is rotated about the rotation axial line L1 by the rotation driving unit 8, regardless of the orientation of the posture of the IC tag 5 disposed in the interior space 3 of the vehicle body 2, the information reading unit 7 can reliably read the object-related information from the IC tag 5 disposed in the interior space 3 of the vehicle body 2 made of a substance through which radio waves cannot be easily transmitted by reducing the effects of reflection, absorption, and so on of radio waves as much as possible to reduce radio wave interference with reflected radio waves, which are referred to as back scatter, from the IC tag 5.

The RFID reading device 1 according to the present embodiment includes a supporting base 10 that supports the antenna unit 6 tiltably about a tilt axial line L2 orthogonal to the rotation axial line L1 and the rotary motor M that rotates the supporting base 10 about the rotation axial line L1, so the antenna unit 6 can be rotated with the tilt angle about the tilt axial line L2 of the antenna unit 6 set to an angle appropriate for the reception of radio waves transmitted from the IC tag 5 and the information reading unit 7 can reliably read the object-related information by reducing the effects of reflection, absorption, and so on of radio waves as much as possible to reduce radio wave interference with reflected radio waves from the IC tag 5.

In addition, in the RFID reading device 1 according to the present embodiment, the supporting base 10 has the tilt driving unit 12 that tilts the antenna unit 6 about the tilt axial line L2, so the information reading unit 7 can read the object-related information from the IC tag 5 more reliably by reducing the effects of reflection, absorption, and so on of radio waves to reduce radio wave interference with reflected radio waves from the IC tag 5.

In the RFID reading device 1 according to the present embodiment, since the rotation driving unit 8 is provided with the elevation driving unit 9 that moves the antenna unit 6 in parallel with the rotation axial line L1 with respect to the rotation driving unit 8, the information reading unit 7 can reliably read the object-related information from the IC tag 5 disposed in the interior space 3 enclosed by the vehicle body 2 made of a substance through which radio waves cannot be easily transmitted by reducing the effects of reflection, absorption, and so on of radio waves as much as possible to reduce radio wave interference with reflected radio waves (back scatter) from the IC tag 5.

In the RFID reading device 1 according to the present embodiment, the IC tag 5 is a passive IC tag 5 and the information reading unit 7 is configured to transmit, from the antenna unit 6, excitation radio waves for transmitting the object-related information from the IC tag 5, thereby achieving the low-cost RFID reading device 1 using the sheet-shaped IC tag 5.

In the RFID reading device 1 according to the present embodiment, since the information reading unit 7 includes the communication unit 13 capable of communicating with the information management server 30 placed outside the vehicle body 2 and the information reading unit 7 is configured to be able to transmit the object-related information from the communication unit 13 to the information management server 30, it is possible to comprehensively manage information about many objects by storing the object-related information in the information management server 30 as data of a database or the like.

In the RFID reading device 1 according to the present embodiment, since the information management server 30 includes the controller 16 that controls the operation of the RFID reading device 1 and the input unit 18 that inputs instruction information for instructing the controller 16 to perform the operation, the information management server 30 can control the operation of the RFID reading device 1 from outside the vehicle body 2, thereby improving utilization.

In the information reading method using the RFID reading device 1 according to the present embodiment, since the antenna unit 6 is rotated about a predetermined rotation axial line by the rotation driving unit 8, regardless of the orientation of the posture of the IC tag 5 disposed in the interior space 3 of the vehicle body 2, the information reading unit 7 can reliably read the object-related information from the IC tag 5 disposed in the interior space 3 of the vehicle body 2 made of a substance through which radio waves cannot be easily transmitted by reducing the effects of reflection, absorption, and so on of radio waves as much as possible to reduce radio wave interference with reflected radio waves (back scatter) from the IC tag 5.

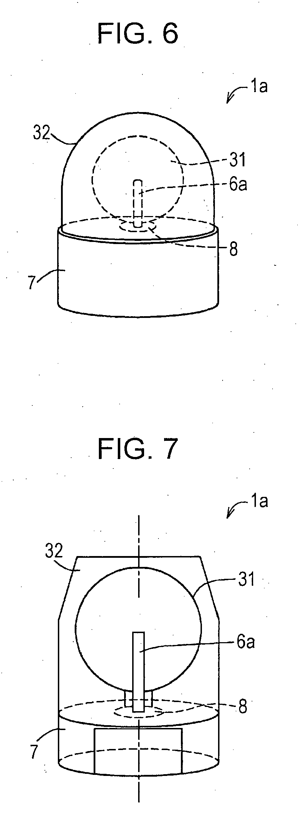

Fig. 6 is a perspective view showing the appearance of an RFID reading device 1a according to another embodiment of the present invention and Fig. 7 is a perspective view schematically showing the structure of the RFID reading device 1a. The components corresponding to those of the above embodiment are given the same reference characters. An RFID reading device 1a according to the present embodiment includes an antenna unit 6a that receives radio waves transmitted from the IC tag 5, the information reading unit 7 that reads the object-related information from the radio waves received by the antenna unit 6a, the rotation driving unit 8 that rotates the antenna unit 6a about the predetermined rotation axial line L1, a radio wave reflecting plate 31 that reflects incoming radio waves to the antenna unit 6a, and a cover 32, made of a material through which radio waves can be easily transmitted, that covers the antenna unit 6a and the radio wave reflecting plate 31.

The RFID reading device 1a of this type is disposed in the interior space 3 of the vehicle body 2 and causes the information reading unit 7 to read the object-related information transmitted from the IC tag 5 while the rotation driving unit 8 rotates the antenna unit 6a about the rotation axial line L1.

As described above, the RFID reading device 1a has the radio wave reflecting plate 31, so the antenna unit 6a can be placed more freely in the information reading unit 7, as compared with the case in which the antenna unit 6a directly receives radio waves.

In the above embodiments, the IC tag 5 is attached to the object 4, which is an important component or the like, disposed in the vehicle body 2, the RFID reading devices 1 and 1a are disposed in the vehicle body 2 during shipment of the vehicle, data of the object 4, which is an important component or the like, shielded electromagnetically by the vehicle body 2 or various vehicle accessories is reliably read from the IC tag 5, and the read data is transmitted to a management apparatus such as a management server outside the vehicle via the above communication means such as the wireless LAN or bluetooth® and then stored, so that information of the important component can be managed.

In the above embodiments, the angle of rotation of the antenna unit 6 or the information reading unit 7 including the antenna unit 6 by the rotation driving unit 8 may be 360 degrees or less than 360 degrees, for example, 120 degrees. The speed of rotation of the antenna unit 6 or the information reading unit 7 including the antenna unit 6 by the rotation driving unit 8 may be set to, for example, 0.5 rpm or an appropriate value depending on the reception intensity of radio waves. If the structure is an ordinary vehicle, the controller 14 of the information reading unit 7 or the controller 16 of the information management server 30 may have an automatic correction function or the like that is based on the rotation speed, tilt angle, radio wave strength, and so on of the information reading unit 7 depending on differences in the vehicle type or the like.

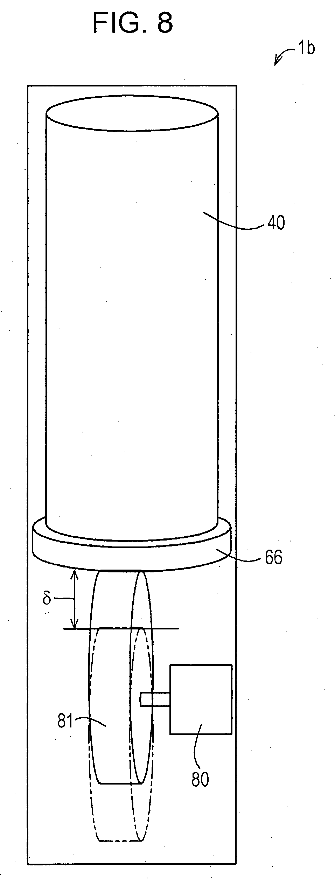

Fig. 8 is a perspective view schematically showing the structure of an RFID reading device 1b according to still another embodiment of the present invention. The components corresponding to those of the above embodiments are given the same reference characters. In still another embodiment of the present invention, the base 66 may be elevated using an elevating motor 80 and a rotating cam 81 instead of the above elevation driving unit 8. In such a structure, as in the above case, information transmitted from the IC tag 5 can be read reliably while elevating the RFID reading device 1b by a distance corresponding to shift amount δ of the cam 81 or performing either or both of rotating and tilting with the optimum height position kept.

In yet another embodiment of the present invention, the data of the object-related information read by the information reading unit 7 is stored in a recording medium without being transmitted to the information management server 30, and the recording medium may be removed later and the data may be written to the information management server 30. The recording medium may be a recording medium that stores programs permanently, such as a tape type recording medium such as, for example, magnetic tape or cassette tape, a disk type recording medium of a magnetic disk such as a floppy® disk, a disk type recording medium of a magnetic disk such as a flexible disk or hard disk or an optical disk such as compact disk read only memory (CD-ROM), magneto optical disk (MO), mini disk (MK), digital versatile disk (DVD), a card type recording medium such as an integrated circuit (IC) card (including a memory card) or optical card, or a semiconductor memory such as a mask ROM, erasable programmable read only memory (EPROM), electrically erasable programmable read only memory (EEPROM), or flash ROM.

In addition, the information management server 30 may be configured to be able to connect to a communication network and the data of the object-related information may be configured so that management information can be input or output from another terminal device via the communication network. The communication network is not limited to any particular network and may be, for example, the Internet, an intranet, an extranet, a local area network (LAN), Integrated Services Digital Network (ISDN), a community antenna television (CATV) communication network, a virtual private network, a telephone line network, a mobile network, a satellite communication network, or the like. Transmission media constituting the communication network is not limited to a particular medium and may be a wired medium such as, for example, IEEE (Institute of Electrical and Electronic Engineers) 1394, universal serial bus (USB), electric power line transport, cable TV line, telephone line, or asymmetric digital subscriber line (ADSL) or may be a wireless medium such as infrared radiation such as infrared data association (IrDA) or remote control, or Bluetooth®, 802.11 wireless, High Data Rate (HDR), mobile phone network, satellite line, or digital terrestrial network.

As described above, in the present invention, when the IC tag 5 is attached to a component disposed in an object enclosed by a metal or other material through which radio waves cannot be easily transmitted, the entire information reading unit 7 or only the antenna unit 6 is rotated or tilted by the RFID reading device 1 disposed in a structure such as the above vehicle body 2 or the like made of a metal or other material that inhibits transmission of radio waves to reflect radio waves, thereby effectively reading the object-related information transmitted from the IC tag 5.

The present invention may be practiced in various other forms without departing from the spirit and major concept of the present invention. Accordingly, the above embodiments are only examples in every respect and the scope of the present invention is not limited by the descriptions in this specification, but defined by the appended claims. In addition, the modifications and changes belonging to the appended claims are included in the scope of the present invention.

### Reference Signs List

- 1, 1a, 1b: RFID reading device
- 2: vehicle body
- 3: interior space
- 4: object
- 5: IC tag
- 6: antenna unit
- 7: information reading unit
- 8: rotation driving unit
- 9: elevation driving unit
- 10: supporting base
- 11: battery
- 13: communication unit
- 14: controller
- 15: wireless module
- 16: controller
- 17: communication unit
- 18: input unit
- 19: display unit
- 20: motor housing
- 21: battery housing
- 22: accommodation unit
- 23: flange
- 30: information management server
- L1: rotation axial line
- M: rotary motor

## Claims

1. An RFID reading device for reading object-related information concerning an object disposed in interior space enclosed by a structure made of a material that inhibits transmission of radio waves using radio waves transmitted from an IC tag attached to the object, the RFID reading device comprising:
an information reading unit that includes an antenna unit for receiving the radio waves transmitted from the IC tag, the information reading unit reading the object-related information from radio waves received by the antenna unit; and
a rotation driving unit that rotates the antenna unit about a predetermined rotation axial line.

2. The RFID reading device according to claim 1,
wherein the rotation driving unit includes a supporting base that supports the antenna unit tiltably about a tilt axial line orthogonal to the rotation axial line and a rotary motor that rotates the supporting base about the rotation axial line.

3. The RFID reading device according to claim 2,
wherein the supporting base is provided with a tilt driving unit that tilts the antenna unit about the tilt axial line.

4. The RFID reading device according to any one of claims 1 to 3,
wherein the information reading unit includes a radio wave reflecting plate reflecting incoming radio waves to the antenna unit.

5. The RFID reading device according to any one of claims 1 to 4,
wherein the rotation driving unit includes an elevation driving unit, the elevation driving unit moving the antenna unit in parallel with the rotation axial line with respect to the rotation driving unit.

6. The RFID reading device according to any one of claims 1 to 5,
wherein the IC tag is a passive IC tag and
the information reading unit is configured to transmit, from the antenna unit, excitation radio waves for transmitting the object-related information from the IC tag.

7. The RFID reading device according to any one of claims 1 to 6,
wherein the information reading device includes a communication unit capable of communicating with an information management device placed outside the structure, the information reading device being configured to be able to transmit the object-related information from the communication unit to the information management device.

8. The RFID reading device according to any one of claims 1 to 7,
wherein the information management device includes a controller that controls operation of the RFID reading device and an input unit that inputs instruction information for instructing the controller to perform the operation.

9. An information reading method using an RFID reading device for reading object-related information using radio waves transmitted from an IC tag attached to an object disposed in interior space enclosed by a structure made of a material that inhibits transmission of radio waves, the information reading method comprising:
installing, in interior space of the structure, an RFID reading unit that includes an information reading unit including an antenna unit for receiving the radio waves transmitted from the IC tag, the information reading unit reading the object-related information from radio waves received by the antenna unit, and a rotation driving unit that rotates the antenna unit about a predetermined rotation axial line;
rotating the antenna unit about the predetermined rotation axial line using the rotation driving unit; and
reading the object-related information transmitted from the IC tag using the information reading unit with the antenna unit being rotated about the predetermined rotation axial line.
